# EUROPÄISCHE PATENTSCHRIFT

(11) **EP 1 870 999 B1**
(45) Veröffentlichungstag und Bekanntmachung des Hinweises auf die Patenterteilung: **02.09.2020**
(21) Anmeldenummer: 07109295.1
(22) Anmeldetag: 31.05.2007
(51) Int. Cl.: H02P 1/46

(54) **Verfahren zum Betreiben einer Pumpe mit einer elektronisch kommutierenden elektrischen Maschine**
Method for operating a pump with an electronic commutating electrical machine
Procédé de fonctionnement d'une pompe dotée d'une machine électrique à commutation électronique

(30) Priorität: 23.06.2006 DE 102006028937
(43) Veröffentlichungstag der Anmeldung: 26.12.2007
(73) Patentinhaber: Vitesco Technologies GmbH, 30165 Hannover (DE)
(72) Erfinder: Eisenblätter, Axel, 65185, Wiesbaden (DE); Graf, Rolf, 67346, Speyer (DE)

(56) Entgegenhaltungen:
- EP-A2- 0 872 949
- EP-A2- 1 391 980
- DE-A1- 19 937 012
- DE-C1- 19 604 701
- US-A1- 2005 220 641

## Beschreibung

Gegenstand der Erfindung ist ein Verfahren zum Betreiben einer Kraftstoffpumpe mit einer elektronisch kommutierenden elektrischen Maschine, vorzugsweise einem Elektromotor, wobei die elektrische Maschine die aus mindestens einer Pumpstufe bestehende Pumpe antreibt, so dass von der Kraftstoffpumpe ein Medium angesaugt und mit einem höheren Druck zu einer Brennkraftmaschine für ein Kraftfahrzeug gefördert wird.

In dem Dokument EP 0872949 A2 sind ein Verfahren und eine Vorrichtung zum Betreiben eines Einphasen-Synchronmotor mit einem Permanentmagnet-Rotor beschrieben. Eine solche Vorrichtung findet insbesondere Einsatz zum Betreiben von Zirkulationspumpen für Geschirrspüler oder für Anwendungen, die wenig Leistung benötigen und geringe Trägheitslasten haben. Mittels unterschiedlich starker Stromimpulse kann der Permanentmagnet-Rotor relativ zu einem Statorpaket ausgerichtet werden.

Druckschrift DE 19604701 C1 offenbart ein Verfahren zum Betreiben einer Servoantriebsvorrichtung mit einem mehrphasigen Synchronmotor, der von einem Frequenzumrichter gespeist wird, wobei dem Synchronmotor ein Teststrom mit vorgegebener Stromvektor-Phasenlage aufgeprägt und das daraus resultierende Drehmoment bestimmt wird. Auf Basis des gemessenen Drehmoments werden Umschalter geschaltet, um den Synchronmotor unter Vorgabe eines Stroms und eines Lastwinkels anzufahren.

Die Druckschrift EP 1391980 A2 offenbart einen schaltbaren Reluktanzmotor und ein Verfahren zum Betreiben eines solchen Motors, bei dem ein Ausrichtungsimpuls an einen Stator angelegt wird, um einen Rotor in einem normalen anzutreibenden Drehmomentbereich zu positionieren, wodurch verhindert wird, dass sich der Rotor rückwärts dreht. Die Standby-Position des Rotors in dem geschalteten Reluktanzmotor wird erfasst und es wird ein Ausrichtungsimpuls an den Stator angelegt, wenn die Standby-Position des Rotors ein Drehmoment ermöglicht, das eine Drehung in einer Richtung entgegen der Solldrehrichtung bewirkt.

Die Druckschrift DE 19937012 A1 offenbart ein Förderaggregat für Kraftstoff mit einem Reluktanzmotor, um auf Permanentmagnete vollständig verzichten zu können. Das Förderaggregat weist zu diesem Zweck eine als Strömungs- oder Seitenkanalpumpe ausgebildete Förderpumpe auf, die eine in einem Gehäuse ausgebildete Pumpenkammer und ein in der Pumpenkammer angeordnetes Pumpen- oder Laufrad aufweist. Ein Elektromotor treibt das Laufrad an, wobei ein Rotor des Elektromotors vom Laufrad der Förderpumpe gebildet ist. Der Elektromotor ist dabei als geschalteter Reluktanzmotor bzw. SR-Motor ausgebildet.

Es ist bekannt, sowohl elektronisch kommutierende elektrische Maschinen als auch einen Kommutator aufweisende elektrische Maschinen zum Antrieb von Pumpen einzusetzen. Die Pumpen dienen zum Fördern eines Mediums zu einem Endverbraucher, wobei das Medium ein Gas oder eine Flüssigkeit sein kann. Dabei besteht vielfach die Forderung, dass mit dem Start des Verbrauchers das Medium mit dem gewünschten Druck am Verbraucher zur Verfügung steht. Während Elektromotoren mit einem Kommutator sehr kurze Startzeiten aufweisen, benötigen elektronisch kommutierende Elektromotoren ein Vielfaches der Startzeit eines Elektromotors mit einem Kommutator. Der Grund hierfür besteht darin, dass für den Startvorgang eine Information der momentanen Rotorlage relativ zum Statorfeld notwendig ist.

Zu diesem Zweck ist es bekannt, Sensoren im Elektromotor anzuordnen, die eine Information über die Rotorlage relativ zum Statorfeld liefern. Derartige Sensoren führen jedoch zu einer Verteuerung des Elektromotors.

Bei sensorlosen elektronisch kommutierenden Elektromotoren wird über die Teilbestromung des Elektromotors eine Rotorbewegung erzeugt, wobei aus dem Induktionsspannungsverlauf in einem nichtbestromten Wicklungsstrang auf die Rotorlage geschlossen werden kann. Mit dieser Information kann anschließend ein Hochlauf des Elektromotors durchgeführt werden.

Der Erfindung liegt die Aufgabe zugrunde, Verfahren zum Betreiben einer Pumpe mit einer elektronisch kommutierenden elektrischen Maschine für ein Kraftfahrzeug, vorzugsweise einem Elektromotor, zu schaffen, welches eine möglichst kurze Anlaufzeit ermöglicht.

Erfindungsgemäß wird die Aufgabe dadurch gelöst, dass der Rotor der elektrischen Maschine aus jeder Rotation immer in derselben elektromagnetischen Position zum Stillstand gebracht wird, welche durch einen bestimmten Bestromungsvektor definiert wird, und dass der Rotor beim Überführen in die Stillstandsposition gebremst wird, sodass bei einem Start des Verbrauchers die elektrische Maschine mit demselben Bestromungsvektor gestartet wird.

Mit dem Parken des Rotors in ein und derselben Position ist eine Bestimmung der Rotorposition vor einem Start nicht mehr notwendig, da diese Position des Rotors durch einen Bestromungsvektor definiert ist. Der Start der elektrischen Maschine muss daher lediglich mit diesem Bestromungsvektor erfolgen. Dadurch kann die elektrische Maschine ohne Zeitverzug zu starten.

Durch das gezielte Bremsen des Rotors wird insbesondere bei großen Trägheitsmomenten des Rotors auf diese Weise das Überführen des Rotors in immer dieselbe Stillstandsposition zuverlässig gewährleistet.

Das Verfahren nutzt den Umstand, dass eine elektronisch kommutierende elektrische Maschine ein Rotorfeld oder eine Remanenz besitzt, so dass sich der Rotor im nichtbestromten Zustand in eine Position minimaler magnetischer Energie bewegt. Infolge von Reibung und der mit dem Rotor verbundenen mechanischen Last verbleibt der Rotor im nichtbestromten Zustand in der einmal eingenommenen Position minimaler magnetischer Energie. Aufgrund der Polteilung gibt es mehrere Positionen minimaler magnetischer Energie, die vom Rotor gegenüber dem Stator bevorzugt eingenommen werden. Diese Positionen des Rotors lassen sich durch jeweils einen Bestromungsvektor definieren, so dass das gezielte Einstellen der Stillstandsposition und die Kenntnis dieses Bestromungsvektors gleichbedeutend ist mit der Information über die Position des Rotors.

Mit der Speicherung des Bestromungsvektors wird eine Information über die Position des Rotors gespeichert, in der der Rotor bei einem Stillstand geparkt wird. Diese Information ermöglicht ein zuverlässiges Starten des Rotors ohne dass dazu weitergehende Maßnahmen zur Positionsbestimmung des Rotors, insbesondere ein Anlaufvorgang, notwendig sind. Dadurch lässt sich die elektrische Maschine ohne Zeitverzug und somit besonders schnell starten.

In einer einfachen Ausgestaltung wird als elektrische Maschine ein Elektromotor verwendet.

Das Verfahren eignet sich besonders zum Betreiben einer Kraftstoffpumpe mit einer Brennkraftmaschine als Verbraucher in einem Kraftfahrzeug.

Die Speicherung des Bestromungsvektors ist mit geringem Aufwand verbunden, wenn der Bestromungsvektor in einer Steuerung, vorzugsweise in einer Kraftstoffpumpensteuerung, gespeichert wird. Da eine Kraftstoffpumpensteuerung bereits für Steuer- und Regelungsaufgaben vorgesehen ist, wird kein zusätzliches Gerät zum Speichern des Bestromungsvektors benötigt.

In einer anderen Ausgestaltung lässt sich der Bestromungsvektor ebenso einfach in einer Motorsteuerelektronik des Kraftfahrzeugs speichern, die zentraler Bestandteil der Kraftfahrzeugelektronik ist.

An einem Ausführungsbeispiel wird die Erfindung näher erläutert. Es zeigen:
- Figur 1: eine schematische Anordnung einer Kraftstoffpumpe mit einer elektrischen Maschine und
- Figur 2: eine schematische Darstellung des Rotors und des Stators der elektrischen Maschine aus Figur 1.

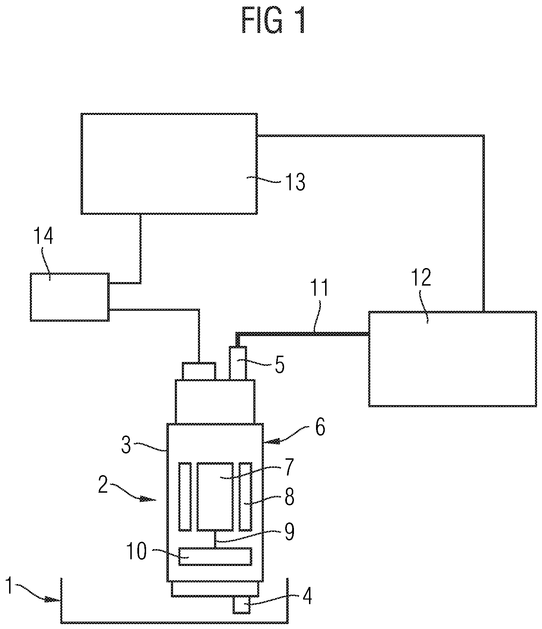

Figur 1 zeigt eine in einem Kraftstoffbehälter 1 angeordnete Kraftstoffpumpe 2. Die Kraftstoffpumpe 2 besteht aus einem Gehäuse 3 mit einem Einlass 4 und einem Auslass 5. Die Kraftstoffpumpe 2 besitzt weiter eine als elektronisch kommutierenden Elektromotor 6 ausgebildete elektrische Maschine, der aus einem Rotor 7 und einen den Rotor 7 umgebenden Stator 8 besteht. Eine mit dem Rotor 7 verbundene Welle 9 treibt eine Pumpstufe 10 an, wodurch Kraftstoff über den Einlass 4 aus dem Kraftstoffbehälter 1 angesaugt und mit höherem Druck über den Auslass 5 und eine daran angeschlossene Vorlaufleitung 11 zur Brennkraftmaschine 12 des Kraftfahrzeugs gefördert wird. Weiterhin sind im Kraftfahrzeug eine Motorsteuerelektronik 13 und eine Kraftstoffpumpensteuerung 14 angeordnet. Die Kraftstoffpumpensteuerung 14 kann entweder Bestandteil der Motorsteuerelektronik 13 sein, in der Kraftstoffpumpe 2 oder als separate Einheit, beispielsweise in einem eine Öffnung des Kraftstoffbehälters 1 verschließenden Flansch, angeordnet sein.

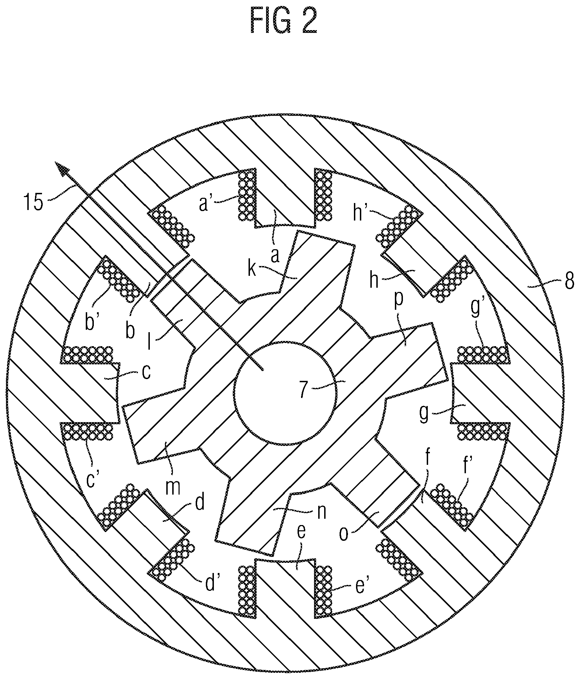

Figur 2 zeigt den Stator 8 und den Rotor 7 im Querschnitt. Der Stator 8 besitzt acht Pole a-h, wobei um jeden Pol eine Wicklung a'-h' angeordnet ist. Im Betrieb des Elektromotors 6 werden jeweils zwei gegenüberliegenden Pole b, f gleichzeitig voll bestromt, wodurch sich jeweils zwei gegenüberliegende Pole 1, o des aus sechs Polen k-p bestehenden Rotors 7 zu den zwei bestromten Polen b, f des Stators 8 ausrichten. Durch ein Weiterschalten der Bestromung der Windungen c', g' richten sich die Pole m, p zu den Polen c, g aus, so dass ein beständiges Weiterschalten der Bestromung der Windungen a'-h' zu einer Rotation des Rotors 7 führt. Die Bestromung der Wicklungen a'-h' lässt sich mittels eines Bestromungsvektors 15 darstellen, der bezüglich seiner Richtung auf die jeweils bestromten Wicklungen b', f' ausgerichtet ist.

Wird die umlaufende Bestromung der Windungen a'-h' beendet, bleibt der Rotor 7 stehen, wobei er sich infolge der Remanenz des Rotors 7 mit zwei Polen zu zwei Polen des Stators 8 ausrichtet, da diese Position einer Position mit minimaler magnetischer Energie entspricht. Sowohl Reibung als auch die mit dem Rotor 7 über die Welle verbundene Pumpstufe wirken als mechanische Last, die zusätzlich ein Verdrehen des Rotors 7 im Stillstand, d.h. im nicht bestromten Zustand der Wicklungen, verhindern.

Diese Position des Rotors 7 lässt sich durch einen Bestromungsvektor darstellen, so dass der Bestromungsvektor eine Information über die Lage, bzw. Ausrichtung des Rotors 7 zum Stator 8 enthält. Durch Speicherung dieses Bestromungsvektors in der Motorsteuerung oder der Kraftstoffpumpensteuerung wird die Information über die Ausrichtung des Rotors 7 gespeichert. Bei einem Start des Elektromotors wird die Bestromung der Wicklungen a'-h' mit den Wicklungen gestartet, die dem Bestromungsvektor entsprechen.

Hierbei sind zwei Vorgehensweisen möglich. Zum einen wird die Bestromung der Wicklungen a'-h' beliebig unterbrochen. Der Rotor 7 richtet sich mit zwei seiner Pole k-p zu den zuletzt bestromten Wicklungen a'-h' des Stators 8 aus. Der dieser Bestromung entsprechende Bestromungsvektor wird gespeichert und beim nächsten Start des Elektromotors verwendet. Zum anderen wird der Rotor 7 bei jedem Stillstand immer in ein und derselben Position geparkt, welche einem bestimmten Bestromungsvektor entspricht. Der Start des Elektromotors erfolgt immer mit diesem Bestromungsvektor.

In der gezeigten Darstellung ist der Rotor 7 mit seinen Polen 1, o zu den Polen b, f des Stators 8 ausrichtet. Diese Lage des Rotors 7 entspricht dem Bestromungsvektor 15. Dieser Bestromungsvektor wird in der Motorsteuerelektronik oder der Kraftstoffpumpensteuerung gespeichert. Beim nächsten Start des Elektromotors werden somit die Windungen b', f' zuerst bestromt. Anschließend wird von diesem Wicklungspaar beginnend die Bestromung weitergeschaltet, wodurch der Elektromotor ohne Zeitverzögerung anläuft.

## Patentansprüche

1. Verfahren zum Betreiben einer Kraftstoffpumpe (2) mit einer elektronisch kommutierenden elektrischen Maschine (6) für ein Kraftfahrzeug, wobei die elektrische Maschine (6) einen Stator (8) und einen Rotor (7) aufweist und die aus mindestens einer Pumpstufe bestehende Kraftstoffpumpe (2) antreibt, so dass von der Kraftstoffpumpe (2) ein Medium angesaugt und mit einem höheren Druck zu einer Brennkraftmaschine (12) für das Kraftfahrzeug gefördert wird, **dadurch gekennzeichnet, dass** der Rotor (7) der elektrischen Maschine (6) aus jeder Rotation immer in derselben elektromagnetischen Position zum Stillstand gebracht wird, wobei diese Position vorgegeben und durch einen bestimmten Bestromungsvektor (15) definiert wird, und dass bei einem Start der Brennkraftmaschine (12) die elektrische Maschine (6) mit demselben Bestromungsvektor (15) gestartet wird, wobei der Rotor (7) beim Überführen in die Stillstandsposition gebremst wird.

2. Verfahren zum Betreiben einer elektronisch kommutierenden elektrischen Maschine (6) nach Anspruch 1,
**dadurch gekennzeichnet, dass** als elektronisch kommutierende elektrische Maschine (6) ein Elektromotor verwendet wird.

3. Verfahren zum Betreiben einer elektronisch kommutierenden elektrischen Maschine (6) nach Anspruch 1 oder 2,
**dadurch gekennzeichnet, dass** der Bestromungsvektor (15) in einer Steuerung (13, 14), vorzugsweise in einer Kraftstoffpumpensteuerung (14), gespeichert wird.

4. Verfahren zum Betreiben einer elektronisch kommutierenden elektrischen Maschine (6) nach einem der Ansprüche 1 bis 3, **dadurch gekennzeichnet, dass** der Bestromungsvektor (15) in einer Steuerung (13) für die Brennkraftmaschine (12), vorzugsweise einer Motorsteuerelektronik (13), gespeichert wird.

## Claims

1. Method for operating a fuel pump (2) with an electronically commutating electric machine (6) for a motor vehicle, wherein the electric machine (6) has a stator (8) and a rotor (7) and drives the fuel pump (2) which is composed of at least on pump stage, so that a medium is sucked in by the fuel pump (2) and is fed at a relatively high pressure to an internal combustion engine (12) for the motor vehicle, **characterized in that** the rotor (7) of the electric machine (6) is always brought to a standstill from each rotation in the same electromagnetic position, wherein this position is predefined and is defined by a specific energization vector (15), and **in that**, when the internal combustion engine (12) starts, the electric machine (6) is started with the same energization vector (15), wherein the rotor (7) is braked when it is placed in the standstill position.

2. Method for operating an electronically commutating electric machine (6) according to Claim 1,
**characterized in that**
an electric motor is used as the electronically commutating electric machine (6).

3. Method for operating an electronically commutating electric machine (6) according to Claim 1 or 2,
**characterized in that**
the energization vector (15) is stored in a controller (13, 14), preferably in a fuel pump controller (14).

4. Method for operating an electronically commutating electric machine (6) according to one of Claims 1 to 3,
**characterized in that**
the energization vector (15) is stored in a controller (13) for the internal combustion engine (12), preferably in motor control electronics (13).

## Revendications

1. Procédé pour faire fonctionner une pompe à carburant (2) comprenant une machine électrique (6) à commutation électronique pour un véhicule automobile, la machine électrique (6) possédant un stator (8) et un rotor (7) et entraînant la pompe à carburant (2) qui se compose d'au moins un étage de pompage, de sorte qu'un fluide est aspiré par la pompe à carburant (2) et refoulé avec une pression supérieure vers un moteur à combustion interne (12) pour le véhicule automobile, **caractérisé en ce que** le rotor (7) de la machine électrique (6), à partir de chaque rotation, est toujours immobilisé dans la même position électromagnétique, cette position étant prédéfinie et définie par un vecteur d'alimentation électrique (15) déterminé, et **en ce que** lors d'un démarrage du moteur à combustion interne (12), la machine électrique (6) est démarrée avec le même vecteur d'alimentation électrique (15), le rotor (7) étant freiné lors du transfert dans la position d'immobilisation.

2. Procédé pour faire fonctionner une machine électrique (6) à commutation électronique selon la revendication 1, **caractérisé en ce que** la machine électrique (6) à commutation électronique utilisée est un moteur électrique.

3. Procédé pour faire fonctionner une machine électrique (6) à commutation électronique selon la revendication 1 ou 2, **caractérisé en ce que** le vecteur d'alimentation électrique (15) est mémorisé dans une commande (13, 14), de préférence dans une commande de pompe à carburant (14).

4. Procédé pour faire fonctionner une machine électrique (6) à commutation électronique selon l'une des revendications 1 à 3, **caractérisé en ce que** le vecteur d'alimentation électrique (15) est mémorisé dans une commande (13) pour le moteur à combustion interne (12), de préférence une électronique de commande de moteur (13).
